Europäisches Patentamt

European Patent Office

Office européen des brevets

(11) Veröffentlichungsnummer: **0 332 990 B1**

(19)

(12) **EUROPÄISCHE PATENTSCHRIFT**

(45) Veröffentlichungstag der Patentschrift: **21.04.93**

(21) Anmeldenummer: **89103970.3**

(22) Anmeldetag: **07.03.89**

(51) Int. Cl.5: **H01F 1/11**, G11B 5/706, G06K 19/08

(54) **Feinteilige kaliumhaltige magnetische Hexaferritpigmente aus Fällungsmagnetit,Verfahren zu ihrer Herstellung und deren Verwendung.**

(30) Priorität: **17.03.88 DE 3808861**

(43) Veröffentlichungstag der Anmeldung:
**20.09.89 Patentblatt 89/38**

(45) Bekanntmachung des Hinweises auf die
Patenterteilung:
**21.04.93 Patentblatt 93/16**

(84) Benannte Vertragsstaaten:
**DE FR GB IT NL**

(56) Entgegenhaltungen:
**EP-A- 0 039 773**
**EP-A- 0 091 640**
**EP-A- 0 223 050**
**DE-A- 3 527 478**

**PATENT ABSTRACTS OF JAPAN, Band 12,
Nr. 165 (C-496)[3012], 18. Mai 1988; & JP-A-62
275 027 (ISHIHARA SANGYO KAISHA LTD)
30-11-1987**

(73) Patentinhaber: **BAYER AG**

**W-5090 Leverkusen 1 Bayerwerk(DE)**

(72) Erfinder: **Meisen, Ulrich, Dr.
Breslauerstrasse 3
W-4150 Krefeld 11(DE)**
Erfinder: **Buxbaum, Gunter, Dr.
Holzapfelweg 2
W-4150 Krefeld(DE)**

**Beschreibung**

Die vorliegende Erfindung betrifft feinteilige magnetische Hexaferritpigmente der allgemeinen Zusammensetzung:

$$M(I)_{1-x}K_xM(II)_yM(III)_zFe_{12-(y+z)}O_{19} \; ,$$

wobei

$0 <= x <= 3, \quad 0 <= (y+z) <= 3, \quad (x+y+z) > = 1,0$
$0 <= y <= 3; \; 0 <= z <= 3$

| | |
|---|---|
| M(I) = | Ba, Sr, Ca, Eu, Pb oder eine Kombination von RE und einwertigen Kationen der Gruppe Li, Na, Rb, Cs, Ag, Tl und |
| RE = | La, Y, Sc, Bi oder andere Seltenerdmetalle ist und |
| M(II) = | Fe(II), Mn, Co, Ni, Zn, Cu, Cd, Mg, Sn(II) und |
| M(III) = | Ti, Zr, Hf, Ga, Sn(IV), Ge, In, Sc, Nb, Ta, V, As, Sb, Bi, Al, Cr(III), Mo, W |

bedeuten, Verfahren zur Herstellung dieser Hexaferritpigmente sowie deren Verwendung in magnetischen Aufzeichnungsmedien.

Hexaferrite weisen Koerzitivfeldstärken auf, wie sie für die hochdichte magnetische Speicherung benötigt werden (45-120 kA/m). Sie sind Metallpigmenten in ihrer Korrosionsstabilität und $CrO_2$ und Co-dotierten Eisenoxidpigmenten in ihrer Thermostabilität überlegen. Für diese Zwecke wurden Hexaferritpigmente mit Magnetoplumbit(M)- oder W-Struktur vorgeschlagen. Zur Senkung der Koerzitivkraft feinteiliger reiner Barium-, Strontium-oder Bleihexaferrite wird üblicherweise mit Co und Ti-Ionen dotiert. Bisher sind verschiedenste Verfahren zur Herstellung derartiger Hexaferrite bekannt geworden.

Bei dem Verfahren der Mischfällung, wie es z.B. in der US-A 4 120 807 beschrieben wird, geht man von Lösungen von Metallsalzen aus, die durch NaOH oder $Na_2CO_3$ oder ähnliche Fällungsmittel gefällt werden.

Aus der EP-A-223 050 sind feinteilige isometrische Hexaferritpigmente, sowie Verfahren zu deren Herstellung und Verwendung bekannt.

Da üblicherweise von Metallchloriden ausgegangen wird, ergeben sich erhebliche Korrosionsprobleme, so daß das Verfahren schwierig durchführbar ist. Weiterhin ist die Herstellung derartiger Bariumferrite durch hydrothermale Verfahren, wie es in der US-A 4 585 568 beschrieben wird. Nachteil derartiger Verfahren sind jedoch hohe Verfahrenskosten und ein geringer Durchsatz.

Es ist ebenfalls möglich, Bariumferrite durch Temperung in Salzschmelzen herzustellen, was aber mit erheblichen Korrosionsproblemen verbunden ist. Ein weiteres Verfahren geht von anorganischen Gläsern aus. Dieses Verfahren, nach dem geeignete Hexaferrite erhalten werden können (US-A 4 341 648) zeichnet sich jedoch durch sehr hohe Verfahrenskosten aus, welche durch die hohen Schmelztemperaturen und durch Korrosionsprobleme durch die borhaltige Schmelze, bedingt sind. Des weiteren ist das Verfahren nicht leicht zu beherrschen. Daneben sind einige weitere Verfahren bekannt geworden, von denen jedoch keines derzeit zur Darstellung feinteiliger Bariumhexaferrite einer definierten Teilchengröße und Form geeignet ist.

Es ist also das Ziel der vorliegenden Erfindung, geeignete Hexaferrite zur Verfügung zu stellen, die in einem wirtschaftlich durchführbaren Verfahren erhältlich sind.

Überraschenderweise gelang es nun, durch Auffällung von Bariumcarbonat auf mit Metallen zur Herabsetzung der Koerzitivkraft dotierten Magnetiten (z.B. Co/Ti, Zn/Ti, Cu/Nb) oder durch Auffällung von Bariumcarbonat auf mit anderen Metallen dotierte Magnetite einen geeigneten Bariumhexaferrit herzustellen. Die besten Hexaferrite werden erfindungsgemäß erhalten, wenn die Fällung der Bariumsalze mit Kaliumcarbonat vorgenommen wird.

Ein geringer Bariumüberschuß, der zu einer Bildung der entsprechenden Menge Fe(II) statt Fe(III) führt, ist bei der Hertstellung von hartmagnetischen Hexaferriten üblich.

Diese erfindungsgemäßen kaliumhaltigen Hexaferrite zeichnen sich gegenüber undotierten oder natriumhaltigen Bariumferriten durch eine wesentlich höhere spezifische Oberfläche bei gleicher Sättigungsmagnetisierung und Koerzitivkraft aus.

Gegenstand der Erfindung sind somit feinteilige Bariumhexaferrite der allgemeinen Zusammensetzung:

$$M(I)_{1-x}K_xM(II)_yM(III)_zFe_{12-(y+z)}O_{19} \; ,$$

wobei

$0 <= x <= 3, \quad 0 <= (y+z) <= 3, \quad (x+y+z) > = 1,0$
$0 <= y <= 3; \; 0 <= z <= 3$

| | |
|---|---|
| M(I) = | Ba, Sr, Ca, Eu, Pb oder eine Kombination von RE und einwertigen Kationen der Gruppe Li, Na, Rb, Cs, Ag, Tl und |
| RE = | La, Y, Sc, Bi oder andere Seltenerdmetalle ist und |
| M(II) = | Fe(II), Mn, Co, Ni, Zn, Cu, Cd, Mg, Sn(II) und |
| M(III) = | Ti, Zr, Hf, Ga, Sn(IV), Ge, In, Sc, Nb, Ta, V, As, Sb, Bi, Al, Cr(III), Mo, W, dadurch gekennzeichnet, daß sie |

einen Kaliumgehalt von 0,01 bis 3 Gew.-% aufweisen.

Gegenstand der Erfindung ist auch ein Verfahren zur Herstellung der erfindungsgemäßen feinteiligen Hexaferritpigmente durch Auffällung von Bariumverbindungen auf Eisenoxide, wobei die Auffällung mit Kaliumcarbonat vorgenommen wird. Als Eisenoxide werden bevorzugt dotierte oder undotierte Eisenoxide einer definierten Form, insbesondere solche Eisenoxide eingesetzt, die einen Teilchendurchmesser von 0,01 $\mu$m und Teilchendicken von 0,01-1 $\mu$m aufweisen, wobei besonders bevorzugt Teilchendurchmesser und Teilchendicke annähernd gleich sind. Als Eisenoxide werden bevorzugt Magnetite eingesetzt.

Sehr gute Ergebnisse werden erreicht, wenn als Eisenoxid ein mit den Metallen M(II) oder M(III) oder einer Kombination von Metallen der Gruppen M(II) und M(III) dotierten Magnetit eingesetzt werden.

Eine besonders bevorzugte Ausführungsform des erfindungsgemäßen Verfahrens besteht darin, daß auf einen durch Fällung hergestellten Magnetit Barium als Carbonat, besonders bevorzugt durch Kaliumcarbonat, aufgefällt wird.

Des weiteren ist eine Ausführungsform des erfindungsgemäßen Verfahrens die, daß bei der Herstellung des Fällungsmagnetits ein Teil des Fe(II) durch ein Metall der Gruppe M(II) oder M(III) oder durch eine Kombination aus zwei oder mehreren Metallen dieser Gruppen ersetzt wird, wobei

M(II) =    Fe(II), Mn, Co, Ni, Zn, Cu, Cd, Mg, Sn(II) und

M(III) =    Ti, Zr, Hf, Ga, Sn(IV), Ge, In, Sc, Nb, Ta, V, As, Sb, Bi, Al, Cr(III), Mo, W ist.

Auf das oben beschriebene Eisenoxid wird Barium in Form eines Salzes der Kohlensäure aufgebracht. Hierzu wird bevorzugt eine etwa 25 %ige Suspension des entsprechenden Eisenoxids in Wasser dispergiert eine Ba-Salzlösung zugetropft, zu der eine Lösung von Kaliumcrabonat in Wasser gegeben wird.

Das entstandene Produkt wird anschließend filtriert und geglüht. Diese erfindungsgemäße Hexaferritteilchen haben die Form des ursprünglichen Eisenoxidteilchens, so daß auf diese Weise sehr feinteilige Bariumferrite einer genau definierten Teilchenform mit sehr enger Teilchengrößenverteilung herstellbar sind.

Eine weitere Ausführungsform des erfindungsgemäßen Verfahrens besteht darin, daß das mit Barium umhüllte Eisenoxid mit einem Sinterschutz versehen wird. Hierfür kann vorteilhaft P205 als Natriumphosphat, $SiO_2$ als Natriumsilikat, $Al_2O_3$ als Aluminat oder als Aluminiumsulfat oder $TiO_2$ als ein wasserlösliches Titanat eingesetzt werden. Hierdurch ist es möglich, den Bariumferrit auf noch höhere Temperaturen zu erhitzen, ohne daß eine starke Versinterung eintritt. Aufgrund ihrer hervorragenden Eigenschaften sind diese feinteiligen Bariumhexaferrite besonders geeignet für den Einsatz in magnetischen Aufzeichnungsmedien.

Weiterhin lassen sich nach diesem Verfahren feinteiilge Bariumferrite mit besonders hohen Koerzitivkräften herstellen, die zur Herstellung von Medien für Sicherheitsmarkierungen geeignet sind.

Auch sind derartige feinteilige Bariumferrite für die Herstellung plastikgebundene Permanentmagnete oder Permanentmagnete besonders geeignet.

Der besondere Vorteil des erfindungsgemäßen Verfahrens liegt in seiner hohen Wirtschaftlichkeit, da die eingesetzten Rohstoffe preiswert und in großer Menge verfügbar sind und die Umsetzungen in Standardapparaturen bei Standardbedingungen durchgeführt werden können.

Gegenstand dieser Erfindung ist auch die Verwendung der erfindungsgemäßen Hexaferrite zur Herstellung von magnetischen Aufzeichnungsmaterialien oder zur Herstellung von schwer löschbaren Sicherheitsmarkierungen.

Die folgenden Beispiele sollen die Erfindung verdeutlichen ohne sie jedoch einzuschränken, insbesondere wird der Fachmann durch Variation der Menge und der Art der Metallionen und der herstellungsbedingungen im Rahmen dieser Erfindung jede gewünschte Zusammensetzung mühelos erhalten können.

Beispiel 1

104,5 l $FeSO_4$-Lösung (0,2394 kg/l $FeSO_4$, 167 l Wasser, 12,75 kg $Fe_2(SO_4)_3$ (21,9 % Fe) in 30 l Wasser, 1,31 kg $ZnSO_4$ in 10 l Wasser und 3,41 l $TiOSO_4$-Lösung (0,1065 kg $TiO_2$/l) werden in einen Rührkessel gefüllt und unter Stickstoff auf 60°C aufgeheizt. Dann werden 80 l NaOH-Lösung (0,3 kg/l) in 60 Minuten zugepumpt, so daß sich ein pH-Wert von 10-11 einstellt. Anschließend wird auf Luftbegasung umgestellt und so lange 6 m³/h Luft eingeblasen, bis ein Potentialabfall (gemessen gegen eine Ag/AgCl-Elektrode) auf ca. 200 mV beobachtet wird. Das Produkt wird abfiltriert und gut salzfrei gewaschen.

12,860 kg Magnetit aus obigem Versuch werden in 21 kg Wasser dispergiert und 70,7 kg Ba-$(NO_3)_2$-Lösung (2,78 % Ba) werden zugegeben. Hierzu wird eine Kaliumcarbonatlösung aus 2,04 kg Kaliumcarbonat (97 %ig) und 27,09 l Wasser in 60 Minuten zugepumpt. Die Suspension wird noch 20 Minuten gerührt und dann filtriert und getrocknet. Das Produkt wird dann in einem Kammerofen in 5 h auf 900°C aufgeheizt und eine Stunde bei dieser Temperatur geglüht.

Es wurde ein Bariumferrit mit folgenden Eigenschaften erhalten:
$_iH_c$: 4487 Oe = 357 KA/m, $M_s$/rho: 72,9 nTm$^3$/g, $M_r$rho: 37,5 nTm$^3$/g, BET-Oberfläche: 13,0 m$^2$/g.

## Beispiel 2

Analog zur Herstellung des Fällungsmagnetits wurden ein weiterer Zn/Ti-dotierter Magnetit hergestellt, wobei jedoch 250 l FeSO$_4$-Lösung, 15 kg Fe$_2$(SO$_4$)$_3$, 5,63 kg ZnSO$_4$ und 18,85 kg TiOSO$_4$-Lösung (8,30 % TiO$_2$) eingesetzt wurden.

13,6 kg des Magnetits wurden mit 29,6 kg Wasser versetzt und dispergiert. Hierzu wurden 3,76 kg Ba(NO$_3$)$_2$ (99 %ig) in 60,9 kg Wasser gegeben. Zu dieser Suspension wurden 2,193 kg K$_2$CO$_3$ (97 %ig) in 28,3 l Wasser in einer Stunde zugetropft. Diese Suspension wurde abfiltriert und weiter wie unter Beispiel 1 angegeben behandelt. Es wurde ein Bariumferrit erhalten, der folgende Eigenschaften aufwies:
$_iH_c$: 3041 Oe = 242 KA/m, $M_s$/rho: 71,4 nTm$^3$/g, $M_r$/rho: 35,4 nTm$^3$/g, BET-Oberfläche: 13,7 m$^2$/g.

## Vergleichsbeispiel

Aus obigem Magnetit wurde durch Auffällung mit Na$_2$CO$_3$ ein Bariumferrit hergestellt, wobei an Stelle des K$_2$CO$_3$ 1,648 kg Na$_2$CO$_3$ (99,5 %ig) in 21,7 kg Wasser eingesetzt wurden. Es wurde ein Bariumferrit mit folgenden Eigenschaften erhalten:
$_iH_c$: 214,9 KA/m, $M_s$/rho: 72,2 nTm$^3$/g, $M_r$/rho: 35,6 nTm$^3$/g, BET-Oberfläche: 8,4 m$^2$/g.

Die Werte der Koerzitivkraft und der Magnetisierung wurden bei einer Feldstärke von 15 KOe = 1194 kA/m gemessen. Die Bestimmung der spezifischen Oberfläche erfolgte nach der BET Einpunktmethode mit Stickstoff.

## Beispiel 3

Ba$_{1,05}$Co$_{0,8}$Ti$_{0,8}$Fe$_{10,4}$O$_{19}$

125 l FeSO$_4$-Lösung mit 150 g/l FeSO$_4$, 9,546 kg Fe$_2$(SO$_4$)$_3$ mit 22,0 % Fe, 3,24 kg CoSO$_4$ (22,5 % Co) und 12,88 kg TiOSO$_4$-Lösung (7,59 % Ti) wurden mit 450 Mol NaOH = 18,0 kg entsprechend den Bedingungen in Beispiel 1 zu einem feinteiligen isometrischen Magnetit umgesetzt.

13,06 kg des so erhaltenen Magnetits wurden mit 5,07 kg einer 5 %igen Ba(NO$_3$)$_2$-Lösung und 1,91 kg einer 7 %igen K$_2$CO$_3$-Lösung entsprechend Beispiel 1 umgesetzt. Nach einer Glühung bei 900 °C, 1 h, entstand ein Co/Ti-haltiger Bariumferrit mit folgenden Eigenschaften:
$_iH_c$: 1571 Oe = 125,07 kA/m, $M_s$/rho: 68,8 nTm$^3$/g, $M_r$/rho: 32,4 nTm$^3$/g, BET-Oberfläche: 14.1 m$_2$/g.

## Beispiel 4

Ba$_{1,05}$Fe$_{12,0}$O$_{19}$

2330 l FeSO$_4$-Lösung mit 150 g/l FeSO$_4$, 406,0 kg Fe$_2$(SO$_4$)$_3$ = 1534 Mol Fe wurden mit der entsprechenden Menge NaOH unter den Bedingungen in Beispiel 1 zu einem feinteiligen isometrischen Magnetit umgesetzt.

888,0 kg des so erhaltenen Magnetits wurden mit 128,5 kg Ba(NO$_3$)$_2$ als 5 %ige Lösung und 68,5 kg K$_2$CO$_3$ als 7 %ige Lösung (97 %iges K$_2$CO$_3$) entsprechend Beispiel 1 umgesetzt. Nach einer Glühung bei 900 °C, 1h, entstand ein Bariumferrit mit folgenden Eigenschaften:
$_iH_c$: 5471 Oe = 435,40 kA/m, $M_s$/rho: 71,9 nTm$^3$/g, $M_r$/rho: 39,1 nTm$^3$/g, BET: 20,7 m$^2$/g.

## Patentansprüche

1. Feinteilige magnetische Hexaferritpigmente der allgemeinen Zusammensetzung:

$$M(I)_{1-x}K_xM(II)_yM(III)_zFe_{12-(y+z)}O_{19},$$

wobei

$0< = x< = 3,\quad 0< = (y+z)< = 3,\quad (x+y+z)> = 1,0$
$0< = y< = 3;\ 0< = z< = 3$

| | |
|---|---|
| M(I) = | Ba, Sr, Ca, Eu, Pb oder eine Kombination von RE und einwertigen Kationen der Gruppe Li, Na, Rb, Cs, Ag, Tl und |
| RE = | La, Y, Sc, Bi oder andere Seltenerdmetalle ist und |
| M(II) = | Fe(II), Mn, Co, Ni, Zn, Cu, Cd, Mg, Sn(II) und |
| M(III) = | Ti, Zr, Hf, Ga, Sn(IV), Ge, In, Sc, Nb, Ta, V, As, Sb, Bi, Al, Cr(III), Mo, W |

bedeuten, dadurch gekennzeichnet, daß sie einen Kaliumgehalt von 0,01 bis 3,0 Gew.-% aufweisen.

2. Verfahren zur Herstellung feinteiliger magnetischer Hexaferritpigmente gemäß Anspruch 1 durch auffällung von Bariumverbindungen auf Eisenoxide, dadurch gekennzeichnet, daß die Auffällung mit Kaliumcarbonat vorgenommen wird.

3. Verfahren gemäß Anspruch 2, dadurch gekennzeichnet, daß als Eisenoxide Magnetite eingesetzt werden.

4. Verfahren gemäß einem der Ansprüche 2 oder 3, dadurch gekennzeichnet, daß als Eisenoxid ein mit den Metallen M(II) oder M(III) oder einer Kombination von Metallen der Gruppen M(II) und M(III) dotiertes Eisenoxid eingesetzt wird.

5. Verfahren gemäß einem oder mehrerer der Ansprüche 2 bis 4, dadurch gekennzeichnet, daß das mit Barium umhüllte Eisenoxid mit einem Sinterschutz versehen wird.

6. Verfahren gemäß Anspruch 5, dadurch gekennzeichnet, daß als Sinterschutz Phosphate, Silicate und/oder Verbindungen des Aluminiums, Chroms, Titans oder Zinns eingesetzt werden.

7. Verwendung der magnetischen Hexaferritpigmente gemäß einem oder mehrerer der Ansprüche 1 bis 6 zur Herstellung von magnetischen Aufzeichnungsmaterialien.

8. Verwendung des magnetischen Hexaferritpigments gemäß einem oder mehrerer der Ansprüche 1 bis 6 zur Herstellung von schwer löschbaren Sicherheitsmarkierungen.

## Claims

1. Fine particulate magnetic hexaferrite pigments of the general composition:

$$M(I)_{1-x}K_xM(II)_yM(III)_zFe_{12-(y+z)}O_{19},$$

wherein

$0 \leq x \leq 3, 0 \leq (y+z) \leq 3, (x+y+z) \geq 1.0$
$0 \leq y \leq 3; 0 \leq z \leq 3,$

M(I)    is Ba, Sr, Ca, Eu, Pb or a combination of RE and monovalent cations of the group comprising Li, Na, Rb, Cs, Ag and Tl,

RE    is La, Y, Sc, Bi or other rare earth metals,

M(II)    represents Fe(II), Mn, Co, Ni, Zn, Cu, Cd, Mg or Sn(II), and

M(III)    represents Ti, Zr, Hf, Ga, Sn(IV), Ge, In, Sc, Nb, Ta, V, As, Sb, Bi, Al, Cr(III), Mo or W,

characterized in that they have a potassium content of 0.01 to 3.0 weight %.

2. A process for producing fine particulate magnetic hexaferrite pigments as claimed in claim 1 by the precipitation of barium compounds on iron oxides, characterized in that the precipitation is effected with potassium carbonate.

3. A process as claimed in claim 2, characterized in that magnetites are used as the iron oxides.

4. A process as claimed in one of claims 2 or 3, characterized in that an iron oxide doped with the metals M(II) or M(III) or with a combination of metals of the M(II) and M(III) groups is used as the iron oxide.

5. A process as claimed in one or more of claims 2 to 4, characterized in that the barium-coated iron oxide is provided with protection against sintering.

6. A process as claimed in claim 5, characterized in that phosphates, silicates and/or compounds of aluminium, chromium, titanium or tin are used as the protection against sintering.

7. The use of the magnetic hexaferrite pigments as claimed in one or more of claims 1 to 6 for the manufacture of magnetic recording materials.

8. The use of the magnetic hexaferrite pigments as claimed in one or more of claims 1 to 6 for the manufacture of security markings which are difficult to erase.

## Revendications

1. Pigments magnétiques fins en hexaferrite de composition générale :

$$M(I)_{1-x}K_xM(II)_yM(III)_zFe_{12-(y+z)}O_{19},$$

dans laquelle

$0 \leq x \leq 3, 0 \leq (y+z) \leq 3, (x+y+z) \geq 1,0$
$0 \leq y \leq 3; 0 \leq z \leq 3$

M(I) =    Ba, Sr, Ca, Eu, Pb ou une combinaison de RE et de cations monovalents du groupe Li, Na, Rb, Cs, Ag, Tl et

RE =    La, Y, Sc, Bi ou d'autres métaux des terres rares et

M(II) =    Fe(II), Mn, Co, Ni, Zn, Cu, Cd, Mg, Sn(II) et

M(III) =    Ti, Zr, Hf, Ga, Sn(IV), Ge, In, Sc, Nb, Ta, V, As, Sb, Bi, Al, Cr(III), Mo, W

caractérisés en ce qu'ils présentent une teneur en potassium de 0,01 à 3,0% en poids.

2. Procédé de préparation de pigments magnétiques fins en hexaferrite selon la revendication 1, par précipitation de composés du baryum sur des oxydes de fer, caractérisé en ce que la précipitation est réalisée avec le carbonate de potassium.

3. Procédé selon la revendication 2, caractérisé en ce que l'on utilise comme oxydes de fer des magnétites.

4. Procédé selon l'une des revendications 2 ou 3, caractérisé en ce que l'on utilise comme oxyde de fer un oxyde de fer dopé avec les métaux M(II) ou M(III) ou avec une combinaison de métaux des groupes M(II) et M(III).

5. Procédé selon une ou plusieurs des revendications 2 à 4, caractérisé en ce que l'oxyde de fer enrobé de baryum est muni d'une protection contre le frittage.

6. Procédé selon la revendication 5, caractérisé en ce que l'on utilise comme protection contre le frittage des phosphates, des silicates et/ou des composés de l'aluminium, du chrome, du titane ou de l'étain.

7. Utilisation des pigments magnétiques en hexaferrite selon une ou plusieurs des revendications 1 à 6 pour la fabrication de matériaux d'enregistrement magnétiques.

8. Utilisation du pigment magnétique en hexaferrite selon une ou plusieurs des revendications 1 à 6 pour la fabrication de marquages de sécurité difficilement effaçables.